# EUROPÄISCHE PATENTSCHRIFT

(11) **EP 3 469 865 B1**
(45) Veröffentlichungstag und Bekanntmachung des Hinweises auf die Patenterteilung: **20.11.2019**
(21) Anmeldenummer: 18196921.3
(22) Anmeldetag: 26.09.2018
(51) Int. Cl.: A01B 63/00, A01B 63/02, A01D 34/42, A01D 34/63, A01D 43/00, A01D 43/08

(54) **MULCHGERÄT MIT SCHLEGEL- UND SICHELMÄHWERK**
MULCHING DEVICE WITH HAMMER AND SICKLE MOWER
APPAREIL DE PAILLAGE POURVU DE FAUCHEUSE À FLÉAUX ET À LAMES

(30) Priorität: 13.10.2017 DE 102017123850
(43) Veröffentlichungstag der Anmeldung: 17.04.2019
(73) Patentinhaber: Fischer Maschinenbau GmbH & Co. KG, 74376 Gemmrigheim (DE)
(72) Erfinder: BEUTEL, Dr. Reiner, 71634 Ludwigsburg (DE); REBER, Dieter, 74376 Gemmrigheim (DE)
(74) Vertreter: Gauss, Nikolai

(56) Entgegenhaltungen:
- EP-A1- 3 162 183
- DE-A1- 4 428 288
- DE-A1- 19 853 774
- FR-A1- 2 771 894
- US-A- 4 077 192
- US-A1- 2017 127 614

## Beschreibung

Die Erfindung betrifft ein Mulchgerät mit einem Schlegelmähwerk, das eine um eine Rotorachse umlaufenden Rotorwelle mit daran aufgenommenen Werkzeugen für das Schneiden und/oder Zerkleinern von Grüngut und/oder Schnittholz und/oder Stroh, insbesondere Maisstroh hat, und mit einem Sichelmähwerk, das wenigstens einen um eine zu der Rotorachse des Schlegelmähwerks windschiefe Messerwellenachse umlaufenden Messerträger mit wenigstens einem an dem Messerträger angeordneten Messerwerkzeug für das Schneiden und/oder Zerkleinern von Grüngut und/oder Schnittholz und/oder Stroh, insbesondere Maisstroh aufweist.

Mulchgeräte werden in der Landwirtschaft, im Wein- und Obstbau oder in der kommunalen Grünpflege eingesetzt. Sie dienen für die Pflege von Grasflächen und für das Freihalten von Gassen zwischen Obstbäumen, Beerenobststräuchern oder Weinreben und ermöglichen dabei auch das Zerkleinern von Schnittholz, z. B. von Rebschnitt bzw. Obstbaumschnitt. In der Landwirtschaft werden Mulchgeräte auch für das Bearbeiten von Brachflächen eingesetzt, etwa für das Bearbeiten von abgeernteten Mais- und Kornfeldern. Die mittels Mulchgeräten zerkleinerte Biomasse bleibt auf den bearbeiteten Flächen regelmäßig liegen. Damit wird erreicht, dass die in der Biomasse enthaltenen Nährstoffe wieder dem Boden zugeführt werden.

Für den Einsatz in unwegsamem Gelände sowie im Plantagenanbau besteht das Bedürfnis, dass die Arbeitsbreite eines Mulchgeräts variiert werden kann, z. B. um Hindernissen auszuweichen oder um Bodenflächen zwischen Anbauzeilen von Obstbäumen oder Rebstöcken zu bearbeiten, die eine unterschiedliche Breite haben oder die, wie es in Hanglagen oftmals der Fall ist, nicht parallel zueinander sind sondern einen Winkel einschließen.

Aus der DE 198 53 774 C2 ist ein Mulchgerät mit einem Schlegelmähwerk bekannt, das eine erste und eine zweite Rotorwelle mit Schlegeln hat. Die Rotorwellen sind seitlich versetzt hintereinander angeordnet, wobei die Rotorachsen zueinander parallel sind. Das Mulchgerät hat eine Schnittstelle für den Anschluss an einen Traktor und weist eine Hydraulikbaugruppe für das Einstellen der Arbeitsbreite auf, mittels der die erste Rotorwelle und die zweite Rotorwelle in der zu den Rotorachsen parallelen Richtung verlagert werden kann. Das Mulchgerät enthält Getriebemittel, um die erste Rotorwelle und die zweite Rotorwelle mittels einer an die Arbeitsmaschine angeschlossenen Gelenkwelle anzutreiben. Weil das Mulchgerät nicht nur eine, sondern zwei Rotorwellen enthält, hat es ein großes Gewicht und ist deshalb insbesondere in Hanglagen und in unwegsamem Gelände nur schwer handhabbar.

In der EP 3 162 183 A1 ist ein Mulchgerät mit einem Sichelmähwerk beschrieben, das drei jeweils um eine vertikale Messerwellenachse umlaufende Messerträger mit daran befestigten Schneidmessern hat. Für das Einstellen der Arbeitsbreite kann in diesem Mulchgerät wenigstens einer der Messerträger mittels einer hydraulischen Verstellvorrichtung in einer horizontalen Ebene linear verlagert und/oder verschwenkt werden.

Die US 2017/0127614 A1 offenbart ein Mulchgerät, das mindestens drei E-förmig angeordnete Arme aufweist, die an einer Trägerachse mittels Bolzen linearbeweglich angebracht sind. Jeder Arm weist einen Mäher auf, der ein Sichelmähwerk und eine Einrichtung zum Zerkleinern von Schnittgut enthält.

Die DE 44 28 288 A1 betrifft ein Mulchgerät mit zwei horizontal rotierenden Mulchmessern, die jeweils an einem Mulchwerkzeugträger befestigt sind, welcher in seiner Breitenausladung gegenüber einem Grundrahmen über einen Hydraulikantrieb verstellbar ist.

Aus der FR 2 771 894 A1 ist ein Mulchgerät bekannt, das ein Sichelmähwerk und eine Einrichtung zum Zerkleinern von Schnittgut enthält. Das Mulchgerät ist besonders für das Schneiden von Gras und Gestrüpp an Straßenrändern geeignet.

Die Firma Sauerburger aber auch andere Unternehmen produzieren und vertreiben Mulchgeräte für den Weinbau, in denen es zwei Messerträger gibt, die jeweils um zueinander parallele Messerwellenachsen umlaufen und die mittels einer gemeinsamen Antriebswelle angetrieben werden, die quer zu der Arbeitsrichtung des Mulchgeräts angeordnet ist. Bei diesem Mulchgerät können die Messerträger für das Verstellen der Arbeitsbreite entlang der die Messerwellenachsen senkrecht schneidenden Wellenachse der Antriebswelle linearbeweglich verlagert werden. Hierfür sind die Messerträger jeweils starr mittels eines auf der Antriebswelle verschiebbar angeordneten Winkelgetriebes mit einem gemeinsamen Zapfwellenantrieb drehgekoppelt. Der Zapfwellenantrieb gewährleistet, dass die Messerträger beim Mulchen relativ zueinander koordiniert so bewegt werden, dass die Flugkreise von an den Messerträgern aufgenommenen Messerwerkzeugen überlappen können. Auf diese Weise wird ein großer Verstellbereich für die Arbeitsbreite des Mulchgeräts ermöglicht. Aufgrund der das koordinierte Bewegen gewährleistenden starren Kopplung der umlaufenden Messerträger mit dem Zapfwellenantrieb wird allerdings das Getriebe eines Traktors, an die das Mulchgerät angeschlossen ist, durch plötzlich auftretende hohe Drehmomente stark belastet, wenn die Messerträger oder die daran aufgenommenen Messerwerkzeuge gegen Steine oder andere Hindernisse schlagen.

Aufgabe der Erfindung ist es, ein Mulchgerät mit einer variablen Arbeitsbreite bereitzustellen, das insbesondere für den Einsatz in unwegsamem Gelände und Hanglagen geeignet ist.

Diese Aufgabe wird mit dem in Anspruch 1 angegebenen Mulchgerät gelöst. Vorteilhafte Ausführungsformen der Erfindung sind in den abhängigen Ansprüchen angegeben.

Unter zwei zueinander windschief angeordneten Achsen versteht die Erfindung eine Anordnung der Achsen, bei der die Achsen sich weder schneiden noch parallel zueinander sind.

Die Erfindung beruht auf dem Gedanken, in einem Mulchgerät ein Schlegelmähwerk und ein Sichelmähwerk zu kombinieren. Das Sichelmähwerk ist in dem Mulchgerät verstellbar. Durch Verstellen des Sichelmähwerks kann die Arbeitsbreite des Mulchgeräts eingestellt werden.

In dem Mulchgerät ist erfindungsgemäß wenigstens ein Messerträger des Sichelmähwerks entlang einer Verstellachse linearbeweglich verlagerbar angeordnet. Die Verstellachse des wenigstens einen Messerträgers liegt dabei in einer zu der Rotorachse der Rotorwelle des Schlegelmähwerks parallelen Ebene. Bevorzugt ist in dem Mulchgerät die Verstellachse zu der Rotorachse der Rotorwelle parallel.

Von Vorteil ist es, wenn das Sichelmähwerk in dem Mulchgerät wenigstens einen weiteren, um eine weitere zu der Rotorachse des Schlegelmähwerks windschiefe Messerwellenachse umlaufenden Messerträger mit wenigstens einem an dem Messerträger angeordneten Messerwerkzeug für das Schneiden und/oder Zerkleinern von Grüngut und/oder Schnittholz und/oder Stroh, insbesondere Maisstroh hat.

Bevorzugt ist auch der weitere Messerträger des Sichelmähwerks entlang der Verstellachse linearbeweglich verlagerbar angeordnet.

Eine Idee der Erfindung ist es, dass das Mulchgerät einen Halterahmen aufweist, in dem das Schlegelmähwerk und das Sichelmähwerk aufgenommen ist. Insbesondere ist es eine Idee der Erfindung, dass das Sichelmähwerk eine Sichelmähwerk-Trägerstruktur mit einem als ein Axiallager ausgebildeten Drehlager für das Halten einer mit dem Messerträger drehfest verbundenen und um die Messerwellenachse umlaufende Messerwelle hat, wobei die Sichelmähwerk-Trägerstruktur für das Bewegen in Richtung der Verstellachse in einem an dem Halterahmen ausgebildeten Linearlager aufgenommen ist.

Indem das Mulchgerät für das Bewegen der Sichelmähwerk-Trägerstruktur in dem Linearlager einen Antrieb enthält, ist es möglich, die Arbeitsbreite des Mulchgeräts während dem Mulchen von einem Traktor aus einzustellen, an dem das Mulchgerät angeschlossen ist.

Bevorzugt weist das Mulchgerät einen an der Sichelmähwerk-Trägerstruktur aufgenommenen, drehbar gelagerten Abrollkörper für das bodenseitige Abstützen des Sichelmähwerks auf. Der Abrollkörper kann dabei auf einer dem Schlegelmähwerk abgewandten Seite des Sichelmähwerks angeordnet sein.

Indem der Abrollkörper an der Sichelmähwerk-Trägerstruktur relativ zu dem als ein Axiallager ausgebildeten Drehlager in einer zu der Rotorachse der Rotorwelle parallelen Richtung seitlich nach außen versetzt angeordnet ist, können die Messerwerkzeuge des Sichelmähwerks vor Steinen und Hindernissen geschützt werden. Von Vorteil ist es, wenn der Abrollkörper an der Sichelmähwerk-Trägerstruktur in einem höhenverstellbaren Drehlager gehalten ist.

Bei einer bevorzugten Ausführungsform der Mulchgeräts ist vorgesehen, dass das Sichelmähwerk einen weiteren, um eine weitere zu der Rotorachse des Schlegelmähwerks windschiefe Messerwellenachse umlaufenden Messerträger mit wenigstens einem an dem Messerträger angeordneten Messerwerkzeug für das Schneiden und/oder Zerkleinern von Grüngut und/oder Schnittholz und/oder Stroh, insbesondere Maisstroh hat. Dabei kann auch der weitere Messerträger des Sichelmähwerks entlang der zu der Rotorachse der Rotorwelle des Schlegelmähwerks parallelen Verstellachse linearbeweglich verlagerbar angeordnet sein.

Bevorzugt hat das Sichelmähwerk eine weitere Sichelmähwerk-Trägerstruktur mit einem weiteren als ein Axiallager ausgebildeten Drehlager für das Halten einer weiteren mit dem Messerträger drehfest verbundenen und um die weitere Messerwellenachse umlaufende Messerwelle, wobei die weitere Sichelmähwerk-Trägerstruktur für das Bewegen in Richtung der Verstellachse in einem an dem Halterahmen ausgebildeten weiteren Linearlager aufgenommen ist. Auch hier ist ein Antrieb für das Bewegen der weiteren Sichelmähwerk-Trägerstruktur in dem weiteren Linearlager von Vorteil. Dann kann nämlich die Arbeitsbreite des Mulchgeräts im laufenden Betrieb grundsätzlich auch nach zwei Seiten quer zu der Arbeitsrichtung eingestellt werden.

Das Mulchgerät enthält günstigerweise auch einen weiteren, an der weiteren Sichelmähwerk-Trägerstruktur aufgenommenen drehbar gelagerten Abrollkörper für das bodenseitige Abstützen des Sichelmähwerks. Dieser weitere Abrollkörper ist wiederum bevorzugt auf einer dem Schlegelmähwerk abgewandten Seite des Sichelmähwerks angeordnet. Auch der weitere Abrollkörper ist möglichst an der Sichelmähwerk-Trägerstruktur relativ zu dem als ein weiteres Axiallager ausgebildeten Drehlager in einer zu der Rotorachse der Rotorwelle parallelen Richtung seitlich nach außen versetzt angeordnet. Von Vorteil ist es, wenn die Messerwellenachse und die weitere Messerwellenachse in einer zu der Rotorachse parallelen Ebene liegen. Indem das wenigstens eine an dem Messerträger angeordnete Messerwerkzeug und das wenigstens eine an dem weiteren Messerträger angeordnete Messerwerkzeug voneinander beabstandete Flugkreise haben, lässt sich erreichen, dass die Messerträger in dem Mulchgerät relativ zueinander nicht koordiniert bewegt werden müssen. In dem Mulchgerät können die mehreren Messerträger dann z. B. mittels Keilriemen oder auch voneinander unabhängig durch Hydraulik- oder Elektromotoren angetrieben werden.

Ein erfindungsgemäßes Mulchgerät kann insbesondere ein an dem Halterahmen festgelegtes Verteilergetriebe enthalten, das eine Schnittstelle zum Anschließen einer Gelenkwelle für das Verbinden mit einem Gelenkwellenabtrieb einer Arbeitsmaschine hat, das einen ersten mit einem ersten Getriebe für das Antreiben der Rotorwelle des Schlegelmähwerks drehgekoppelten Abtrieb hat und das einen zweiten mit einem zweiten Getriebe für das Antreiben der Messerwelle drehgekoppelten Abtrieb aufweist. Indem das erste Getriebe einen Keilriementrieb enthält, kann erreicht werden, dass Schläge auf die Rotorwelle, wenn diese beim Mulchen an Hindernisse gelangt, nicht oder nur erheblich gedämpft in die Gelenkwelle und von dort in den Antrieb eines Traktors eingeleitet werden. Aus diesem Grund ist es auch von Vorteil, wenn das zweite Getriebe eine als ein Keilriementrieb ausgebildete Drehmomentübertragungsstrecke aufweist.

Das Schlegelmähwerk in dem Mulchgerät kann insbesondere einen mit dem Halterahmen starr verbundenen Rotorwellenträger aufweisen, an dem wenigstens ein drehbar gelagerter Abrollkörper für das bodenseitige Abstützen des Schlegelmähwerks aufgenommen ist. Dieser Abrollkörper ist dabei bevorzugt auf einer dem Sichelmähwerk abgewandten Seite des Schlegelmähwerks angeordnet. Der wenigstens eine Abrollkörper kann z. B. ein Walzenkörper sein. Insbesondere kann der wenigstens eine drehbar gelagerte Abrollkörper in einem höhenverstellbaren Drehlager gehalten sein.

Der Halterahmen des Mulchgeräts hat bevorzugt eine Schnittstelle für den Anschluss an eine Arbeitsmaschine. Bei einem erfindungsgemäßen Mulchgerät kann insbesondere vorgesehen sein, dass das Sichelmähwerk zwischen der Schnittstelle für den Anschluss an eine Arbeitsmaschine und dem Schlegelmähwerk angeordnet ist.

Im Folgenden wird die Erfindung anhand der in der Zeichnung in schematischer Weise dargestellten Ausführungsbeispiele näher erläutert.

Es zeigen:
- Fig. 1: eine perspektivische Ansicht des Mulchgeräts;
- Fig. 2: eine Draufsicht des Mulchgeräts in einer ersten Einstellung;
- Fig. 3: eine Ansicht des Mulchgeräts in der ersten Einstellung von unten;
- Fig. 4: eine Draufsicht des Mulchgeräts in einer von der ersten Einstellung verschiedenen zweiten Einstellung;
- Fig. 5: eine Ansicht des Mulchgeräts in der zweiten Einstellung von unten;
- Fig. 6: eine Seitenansicht des Mulchgeräts; und
- Fig. 7: eine Ansicht der einer Arbeitsmaschine zugewandten Seite des Mulchgeräts.

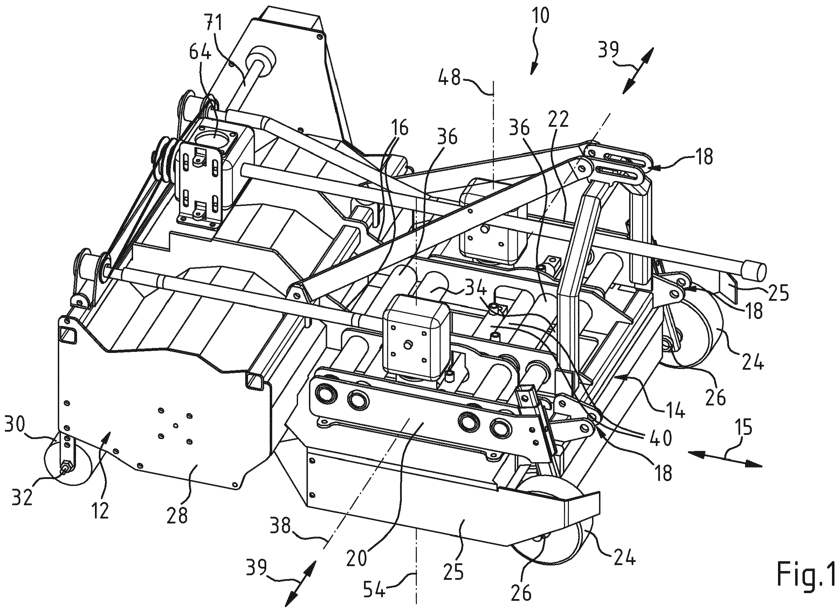

Das in Fig. 1 gezeigte Mulchgerät 10 hat ein Schlegelmähwerk 12 und ein Sichelmähwerk 14. Das Schlegelmähwerk 12 und das Sichelmähwerk 14 sind in dem Mulchgerät 10 in einem Halterahmen 16 aufgenommen, der eine vorzugsweise als Norm-Dreipunkt-Kat1 ausgebildete Schnittstelle 18 für das Anschließen an das Aufnahmesystem einer Arbeitsmaschine hat, z. B. einem Traktor. Um eine Arbeitsfläche zu mulchen, wird das Mulchgerät 10 in der Arbeitsrichtung 15 bewegt. Das Sichelmähwerk 14 ist über den Halterahmen mit dem Schlegelmähwerk 12 starr verbunden. In dem Mulchgerät 10 ist das Sichelmähwerk 14 zwischen der Schnittstelle 18 und dem Schlegelmähwerk 12 angeordnet.

Das Sichelmähwerk 14 enthält eine erste Sichelmähwerk-Trägerstruktur 20 und eine zweite Sichelmähwerk-Trägerstruktur 22. An der ersten Sichelmähwerk-Trägerstruktur 20 ist ein als eine Rolle ausgebildeter Abrollkörper 24 aufgenommen, der in einem höhenverstellbaren Drehlager 26 für das bodenseitige Abstützen des Sichelmähwerks 14 gehalten ist. An der zweiten Sichelmähwerk-Trägerstruktur 22 ist ebenfalls ein als eine Rolle ausgebildeter Abrollkörper 24 aufgenommen, der wiederum in einem höhenverstellbaren Drehlager 26 für das bodenseitige Abstützen des Sichelmähwerks 14 aufgenommen ist.

Das Schlegelmähwerk 12 weist einen mit dem Halterahmen 16 starr verbundenen Rotorwellenträger 28 auf. An dem Rotorwellenträger 28 ist ein als eine Walze ausgebildeter drehbar gelagerter Abrollkörper 30 für das bodenseitige Abstützen des Schlegelmähwerks 12 aufgenommen. Der Abrollkörper 30 ist auf einer dem Sichelmähwerk 14 abgewandten Seite des Schlegelmähwerks 12 angeordnet. Der Abrollkörper 30 ist für das bodenseitige Abstützen des Schlegelmähwerks 12 in einem ersten und einem zweiten höhenverstellbaren Drehlager 32 gehalten.

Die erste Sichelmähwerk-Trägerstruktur 20 und die zweite Sichelmähwerk-Trägerstruktur 22 sind jeweils in einem an dem Halterahmen 16 ausgebildeten Linearlager 34, 36 aufgenommen. In dem Linearlager 34 kann die erste Sichelmähwerk-Trägerstruktur 20 entlang einer Verstellachse 38 entsprechend den Doppelpfeilen 39 mittels einer als ein Hydraulikzylinder 40 ausgebildeten Antriebseinheit verstellt werden. Entsprechend ist die zweiten Sichelmähwerk-Trägerstruktur 22 in dem Linearlager 36 entlang der Verstellachse 38 bewegbar angeordnet und kann mittels eines weiteren Hydraulikzylinders 40 verstellt werden. Der Halterahmen 16 bildet mit der ersten Sichelmähwerk-Trägerstruktur 20 und der zweiten Sichelmähwerk-Trägerstruktur 22 sowie dem Rotorwellenträger 28 mit den als eine Rolle ausgebildeten Abrollkörpern 24 für das bodenseitige Abstützen des Sichelmähwerks 14 und dem als eine Walze ausgebildeten Abrollkörper 30 für das bodenseitige Abstützen des Schlegelmähwerks 12 ein Fahrwerk für das Mulchgerät 10. An der ersten- und zweiten Sichelmähwerk-Trägerstruktur 20, 22 ist jeweils ein Abweisblech 25 festgelegt. Die Abweisbleche 25 dienen dazu, das Mulchgerät 10 von Hindernissen wie z. B. Baustämmen oder Steinen abzuweisen. Darüber hinaus bieten die Abweisbleche 25 einen Schutz vor den umlaufenden Messerwerkzeugen des Sichelmähwerks 14.

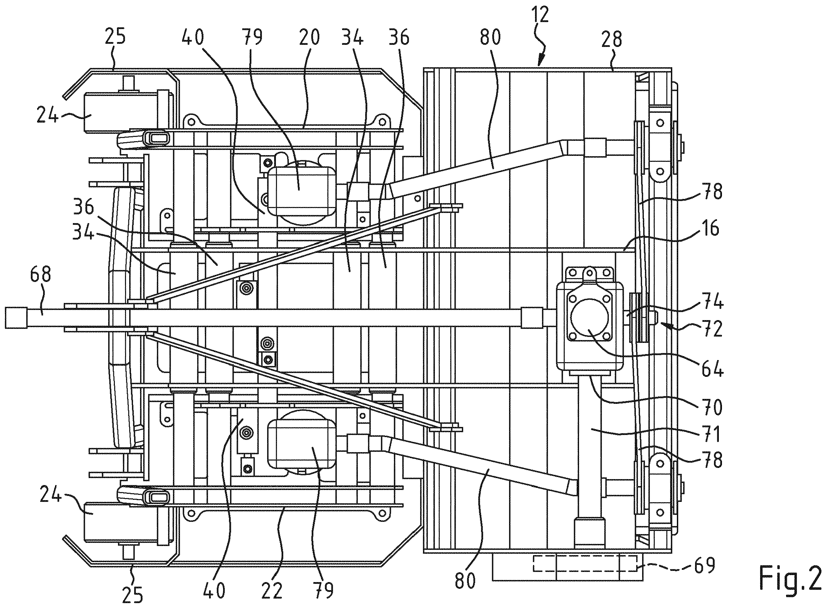

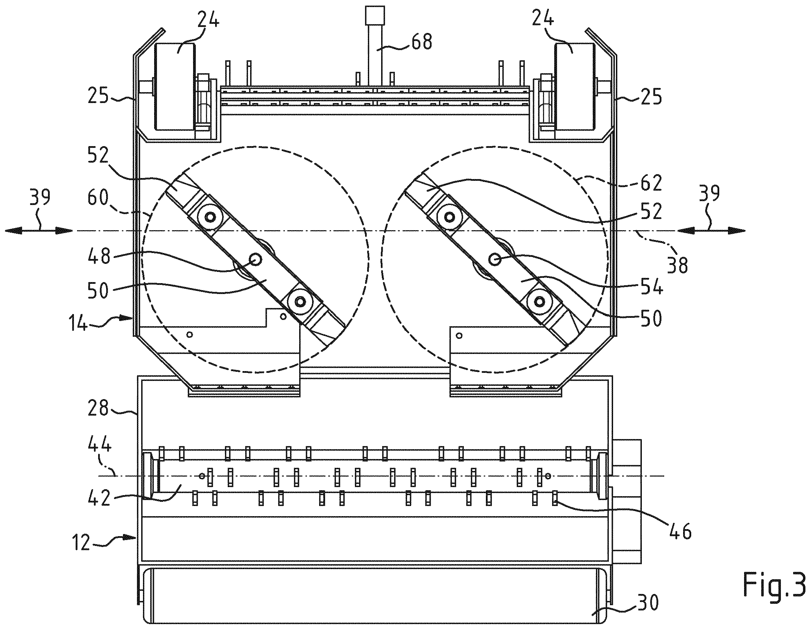

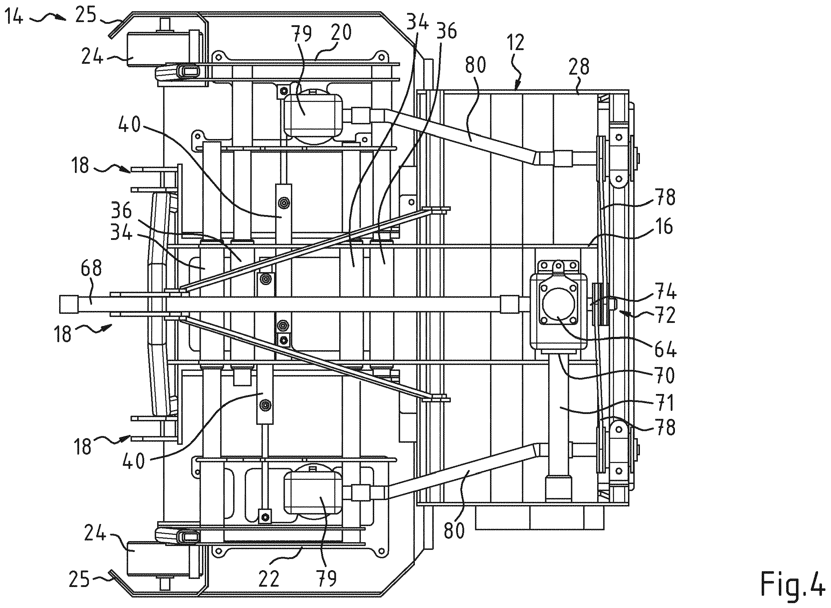

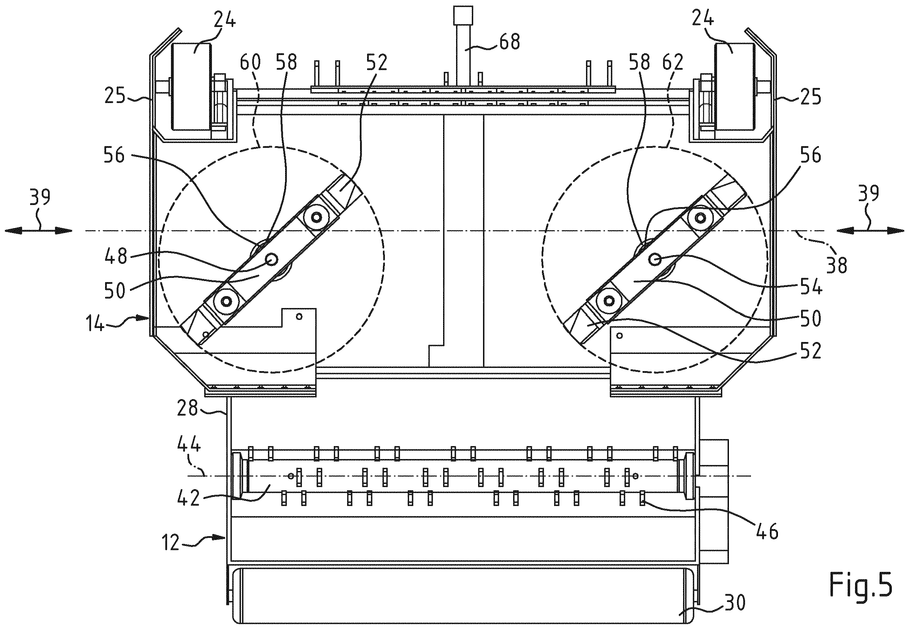

Die Fig. 2 ist eine Draufsicht des Mulchgeräts 10 und die Fig. 3 zeigt das Mulchgerät 10 in einer ersten Einstellung des Sichelmähwerks 14 von unten. Die Fig. 4 ist eine weitere Draufsicht des Mulchgeräts 10 in einer von der ersten Einstellung verschiedenen zweiten Einstellung. In der Fig. 5 ist das Mulchgerät 10 von unten in der von der ersten Einstellung verschiedenen zweiten Einstellung des Sichelmähwerks 14 zu sehen. Das Schlegelmähwerk 12 hat eine an dem Rotorwellenträger 28 drehbar gelagerte Rotorwelle 42, die um eine Rotorachse 44 umläuft. An der Rotorwelle 42 sind als Schlegel ausgebildete Werkzeuge 46 für das Schneiden und/oder Zerkleinern von Grüngut und/oder Schnittholz und/oder Stroh, insbesondere Maisstroh aufgenommen. Zu bemerken ist, dass die an der Rotorwelle 42 aufgenommenen Werkzeuge 46 in einer modifizierten Ausführungsform des Mulchgeräts 10 auch mit der Rotorwelle 42 fest verbundene Messer sein können. Die Rotorwelle 42 ist bevorzugt massiv, damit sie bei einem Kontakt mit Hindernissen, insbesondere Steinen, keinen Schaden nehmen kann. Die Rotorwelle 42 rotiert beim Mulchen mit dem Mulchgerät mit einer hohen Umdrehungszahl, die z. B. 2000 U/min bis 3000 U/min oder noch mehr betragen kann. Bei Rotieren der Rotorwelle 42 schlagen oder schneiden die daran aufgenommenen Werkzeuge 46 Grüngut ab und zerkleinern Schnittholz und/oder Stroh, insbesondere Maisstroh.

Das Sichelmähwerk 14 enthält einen ersten, um eine zu der Rotorachse 44 des Schlegelmähwerks 12 windschief angeordnete Messerwellenachse 48 umlaufenden Messerträger 50 mit wenigstens einem ersten und einem zweiten an dem Messerträger 50 angeordneten Messerwerkzeug 52 für das Schneiden und/oder Zerkleinern von Grüngut und/oder Schnittholz und/oder Stroh, insbesondere Maisstroh. In dem Sichelmähwerk 14 gibt es einen weiteren um eine zu der Rotorachse 44 des Schlegelmähwerks 12 windschief angeordnete weitere Messerwellenachse 54 umlaufenden weiteren Messerträger 50 mit wenigstens einem ersten und einem zweiten an dem Messerträger 50 angeordneten Messerwerkzeug 52 für das Schneiden und/oder Zerkleinern von Grüngut und/oder Schnittholz und/oder Stroh, insbesondere Maisstroh. Die Messerwellenachsen 48, 54 sind zueinander parallel. Die Messerwellenachsen 48, 54 definieren dabei eine Ebene, die zu der Rotorachse 44 der Schlegelmähwerks 12 parallel ist.

An der erste Sichelmähwerk-Trägerstruktur 20 ist ein als ein Axiallager ausgebildetes Drehlager 56 für das Halten einer ersten Messerwelle 58 mit der Messerwellenachse 54 festgelegt, die mit dem Messerträger 50 drehfest verbunden ist. Entsprechend ist an der zweiten Sichelmähwerk-Trägerstruktur 22 ein als ein Axiallager ausgebildetes weiteres Drehlager 56 für das Halten einer weiteren Messerwelle 58 festgelegt, die mit dem weiteren Messerträger 50 drehfest verbunden ist.

Durch Verstellen der Sichelmähwerk-Trägerstrukturen 20, 22 in den Linearlagern 34, 36 können die beiden Messerträger 50 des Sichelmähwerks 14 mit den daran aufgenommenen Messerwerkzeugen 52 in der Richtung der zu der Rotorachse 44 der Rotorwelle 42 des Schlegelmähwerks 12 parallelen Verstellachse 38 linear verlagert werden. Die Verstellachse 38 ist zu einer die Messerwellenachsen 48, 54 senkrecht schneidenden Geraden parallel.

Der als eine Walze ausgebildete Abrollkörper 30 für das bodenseitige Abstützen des Schlegelmähwerks 12 ist auf der dem Sichelmähwerk 14 abgewandten Seite des Mulchgeräts 10 angeordnet. Die als Rolle ausgebildeten Abrollkörper 24 sind an der Sichelmähwerk-Trägerstruktur 20, 22 jeweils relativ zu dem als ein Axiallager ausgebildeten Drehlager 56 in einer zu der Rotorachse 44 der Rotorwelle 42 des Schlegelmähwerks 12 parallelen Richtung seitlich nach außen versetzt angeordnet.

Die an dem ersten Messerträger 50 angeordneten Messerwerkzeuge 52 haben jeweils einen Flugkreis 60, der von den Flugkreisen 62 der an dem zweiten Messerträger angeordneten Messerwerkzeuge 52 beabstandet ist.

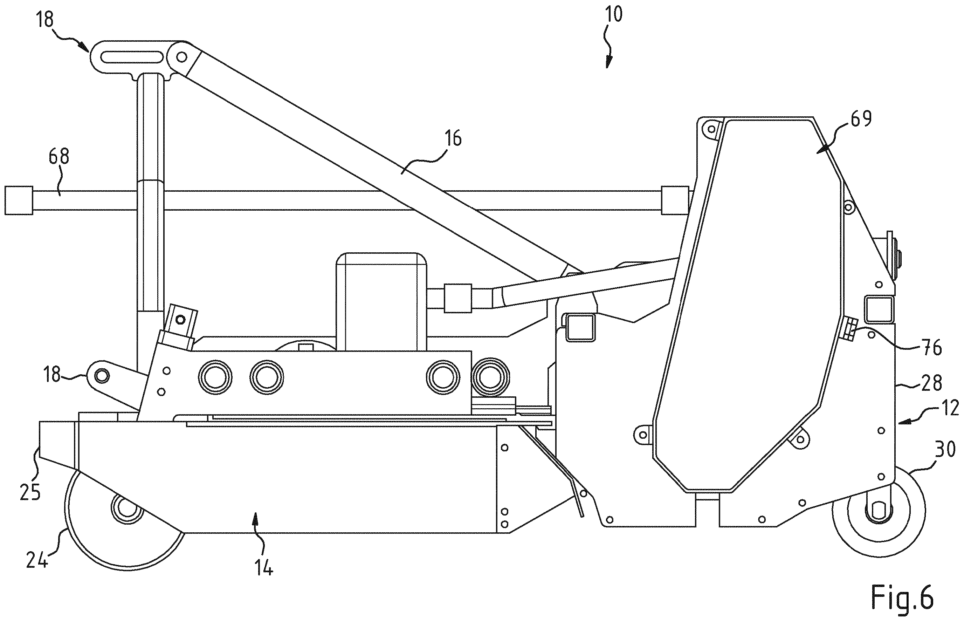

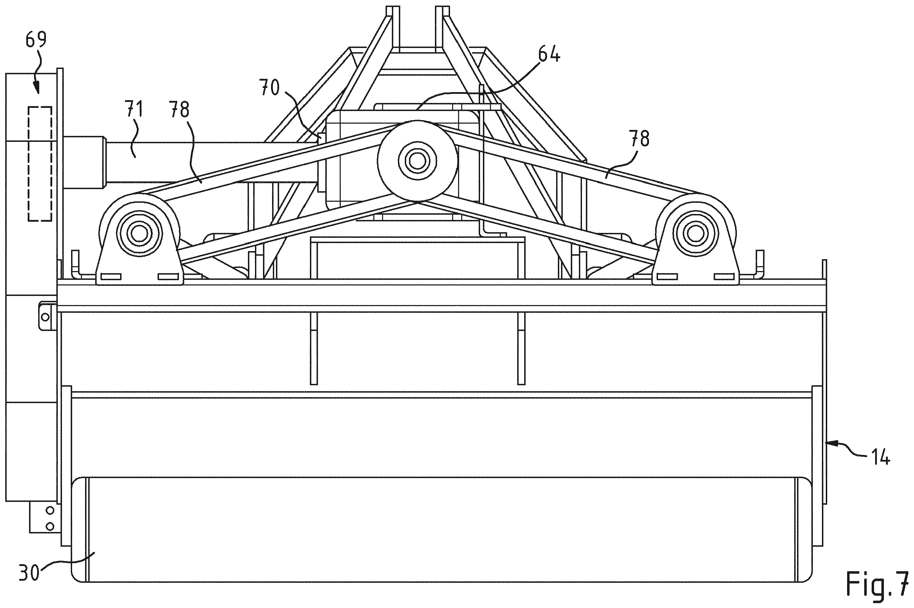

Die Fig. 6 ist eine Seitenansicht des Mulchgeräts 10. Die Fig. 7 zeigt das Mulchgerät 10 von seiner der Anschlussschnittstelle 18 abgewandten Seite.

Das Mulchgerät 10 weist ein an dem Halterahmen 16 festgelegtes Verteilergetriebe 64 auf, das eine Schnittstelle 66 zum Anschließen einer Zapfwelle 68 für das Verbinden mit einem Gelenkwellenabtrieb einer Arbeitsmaschine hat. Das Verteilergetriebe 64 hat einen ersten mit einem ersten Getriebe 69 für das Antreiben der Rotorwelle des Schlegelmähwerks 12 drehgekoppelten Abtrieb 70 zu einer Welle 71 und einen zweiten mit einem zweiten Getriebe 72 für das Antreiben der Messerwellen 58 drehgekoppelten Abtrieb 74. Das erste Getriebe 69 enthält einen Keilriementrieb mit einer Keilriemen-Spanneinrichtung 76. Das zweite Getriebe 72 enthält als Keilriementrieb ausgebildete Drehmomentübertragungsstrecken 78, aus denen das übertragene Drehmoment in Gelenkwellen 80 eingeleitet wird. Die Gelenkwellen 80 übertragen ein an der Zapfwelle 68 bereitgestelltes Antriebsdrehmoment jeweils über einen Winkeltrieb 79 auf die Messerwellen 58.

Das Mulchgerät 10 wird für das Mulchen von einem Traktor an der Schnittstelle 18 aufgenommen und entweder hinter diesem schwimmend gezogen oder vor diesem schwimmend geschoben. Die als Laufrollen ausgebildeten Abrollkörper 24 und der als Walze ausgebildete Abrollkörper 30 gleichen dabei die Unebenheiten des Bodens aus, auf dem das Mulchgerät in der Arbeitsrichtung 15 bewegt wird. Von Vorteil ist es, wenn der Traktor ein Hydrauliksystem hat, mittels dessen das Mulchgerät 10 angehoben und abgesenkt werden kann.

Zu bemerken ist, dass in einer modifizierten Ausführungsform des vorstehend beschriebenen Mulchgeräts vorgesehen sein kann, das Schlegelmähwerk und/oder das Sichelmähwerk mittels Hydraulikmotoren anzutreiben, die z. B. über Hydraulikleitungen an das Hydrauliksystem eines Traktors angeschlossen sind. Alternativ oder zusätzlich ist es auch möglich, für den Antrieb des Sichelmähwerks und/oder des Schlegelmähwerks in dem Mulchgerät Elektromotoren vorzusehen.

Zusammenfassend sind folgende bevorzugte Merkmale der Erfindung festzuhalten: Ein Mulchgerät 10 enthält ein Schlegelmähwerk 12, das eine um eine Rotorachse 44 umlaufenden Rotorwelle 42 mit daran aufgenommenen Werkzeugen 46 für das Schneiden und/oder Zerkleinern von Grüngut und/oder Schnittholz und/oder Stroh, insbesondere Maisstroh aufweist, und hat ein Sichelmähwerk 14 mit einem um eine zu der Rotorachse 44 des Schlegelmähwerks 12 windschiefe Messerwellenachse 48 umlaufenden Messerträger 50, an dem wenigstens ein Messerwerkzeug 52 für das Schneiden und/oder Zerkleinern von Grüngut und/oder Schnittholz und/oder Stroh, insbesondere Maisstroh aufgenommen ist. Der Messerträger 50 des Sichelmähwerks 14 ist entlang einer Verstellachse 38 linearbeweglich verlagerbar angeordnet und liegt in einer zu der Rotorachse 44 der Rotorwelle 42 des Schlegelmähwerks 12 parallelen Ebene.

### Bezugszeichenliste

- 10: Mulchgerät
- 12: Schlegelmähwerk
- 14: Sichelmähwerk
- 15: Arbeitsrichtung
- 16: Halterahmen
- 18: Schnittstelle
- 20: erste Sichelmähwerk-Trägerstruktur
- 22: zweite Sichelmähwerk-Trägerstruktur
- 24: Abrollkörper
- 25: Abweisblech
- 26: höhenverstellbares Drehlager
- 28: Rotorwellenträger
- 30: Abrollkörper
- 32: Drehlager
- 34, 36: Linearlager
- 38: Verstellachse
- 39: Doppelpfeil
- 40: Hydraulikzylinder
- 42: Rotorwelle
- 44: Rotorachse
- 46: Werkzeug
- 48: Messerwellenachse
- 50: Messerträger
- 52: Messerwerkzeug
- 54: weitere Messerwellenachse
- 56: Drehlager
- 58: Messerwelle
- 60: Flugkreis
- 62: Flugkreis
- 64: Verteilergetriebe
- 66: Schnittstelle
- 68: Zapfwelle/Gelenkwelle
- 69: erstes Getriebe
- 70: drehgekoppelter Abtrieb
- 71: Welle
- 72: zweites Getriebe
- 74: drehgekoppelter Abtrieb
- 76: Keilriemen-Spanneinrichtung
- 78: Drehmomentübertragungsstrecke
- 79: Winkeltrieb
- 80: Gelenkwelle

## Patentansprüche

1. Mulchgerät (10) mit einem Schlegelmähwerk (12), das eine um eine Rotorachse (44) umlaufenden Rotorwelle (42) mit daran aufgenommenen Werkzeugen (46) für das Schneiden und/oder Zerkleinern von Grüngut und/oder Schnittholz und/oder Stroh, insbesondere Maisstroh hat, und mit einem Sichelmähwerk (14), das einen um eine zu der Rotorachse (44) des Schlegelmähwerks (12) windschiefe Messerwellenachse (48) umlaufenden Messerträger (50) mit wenigstens einem an dem Messerträger (50) angeordneten Messerwerkzeug (52) für das Schneiden und/oder Zerkleinern von Grüngut und/oder Schnittholz und/oder Stroh, insbesondere Maisstroh aufweist,
**dadurch gekennzeichnet, dass**
der Messerträger (50) des Sichelmähwerks (14) entlang einer Verstellachse (38) linearbeweglich verlagerbar angeordnet ist, die in einer zu der Rotorachse (44) der Rotorwelle (42) des Schlegelmähwerks (12) parallelen Ebene liegt.

2. Mulchgerät (10) nach Anspruch 1, **dadurch gekennzeichnet, dass** das Sichelmähwerk (14) einen weiteren, um eine weitere zu der Rotorachse (44) des Schlegelmähwerks (12) windschiefe Messerwellenachse (48) umlaufenden Messerträger (50) mit wenigstens einem an dem Messerträger (50) angeordneten Messerwerkzeug (52) für das Schneiden und/oder Zerkleinern von Grüngut und/oder Schnittholz und/oder Stroh, insbesondere Maisstroh hat.

3. Mulchgerät (10) nach Anspruch 2, **dadurch gekennzeichnet, dass** auch der weitere Messerträger (50) des Sichelmähwerks (14) entlang der Verstellachse (38) linearbeweglich verlagerbar angeordnet ist.

4. Mulchgerät (10) nach Anspruch 1, **gekennzeichnet durch** einen das Schlegelmähwerk (12) und das Sichelmähwerk (14) aufnehmenden Halterahmen (16), wobei das Sichelmähwerk (14) eine Sichelmähwerk-Trägerstruktur (20, 22) mit einem als ein Axiallager ausgebildeten Drehlager (26, 32, 56) für das Halten einer mit dem Messerträger (50) drehfest verbundenen und um die Messerwellenachse (48) umlaufenden Messerwelle (58) hat, und wobei die Sichelmähwerk-Trägerstruktur (20, 22) für das Bewegen in Richtung der Verstellachse (38) in einem an dem Halterahmen (16) ausgebildeten Linearlager (34, 36) aufgenommen ist.

5. Mulchgerät (10) nach Anspruch 4, **gekennzeichnet durch** einen Antrieb für das Bewegen der Sichelmähwerk-Trägerstruktur (20, 22) in dem Linearlager (34, 36).

6. Mulchgerät (10) nach Anspruch 4 oder 5, **gekennzeichnet durch** einen an der Sichelmähwerk-Trägerstruktur (20, 22) aufgenommenen drehbar gelagerten Abrollkörper (24, 30) für das bodenseitige Abstützen des Sichelmähwerks (14).

7. Mulchgerät (10) nach einem der Ansprüche 4 bis 6, **dadurch gekennzeichnet, dass** das Sichelmähwerk (14) einen weiteren, um eine weitere zu der Rotorachse (44) des Schlegelmähwerks (12) windschiefe Messerwellenachse (48) umlaufenden Messerträger (50) mit wenigstens einem an dem Messerträger (50) angeordneten Messerwerkzeug (52) für das Schneiden und/oder Zerkleinern von Grüngut und/oder Schnittholz und/oder Stroh, insbesondere Maisstroh hat.

8. Mulchgerät (10) nach Anspruch 7, **dadurch gekennzeichnet, dass** auch der weitere Messerträger (50) des Sichelmähwerks (14) entlang der zu der Rotorachse (44) der Rotorwelle (42) des Schlegelmähwerks (12) parallelen Verstellachse (38) linearbeweglich verlagerbar angeordnet ist.

9. Mulchgerät (10) nach Anspruch 8, **dadurch gekennzeichnet, dass** das Sichelmähwerk (14) eine weitere Sichelmähwerk-Trägerstruktur (22) mit einem weiteren als ein Axiallager ausgebildeten Drehlager (26, 32, 56) für das Halten einer weiteren mit dem Messerträger (50) drehfest verbundenen und um die weitere Messerwellenachse (54) umlaufenden Messerwelle (58) hat, wobei die weitere Sichelmähwerk-Trägerstruktur (22) für das Bewegen in Richtung der Verstellachse (38) in einem an dem Halterahmen (16) ausgebildeten weiteren Linearlager (34, 36) aufgenommen ist.

10. Mulchgerät (10) nach Anspruch 9, **gekennzeichnet durch** einen Antrieb für das Bewegen der weiteren Sichelmähwerk-Trägerstruktur (22) in dem weiteren Linearlager (34, 36).

11. Mulchgerät (10) nach Anspruch 9 oder 10, **gekennzeichnet durch** einen an der weiteren Sichelmähwerk-Trägerstruktur (22) aufgenommenen weiteren drehbar gelagerten Abrollkörper (24, 30) für das bodenseitige Abstützen des Sichelmähwerks (14).

12. Mulchgerät (10) nach einem der Ansprüche 4 bis 11, **dadurch gekennzeichnet, dass** das wenigstens eine an dem Messerträger (50) angeordnete Messerwerkzeug (52) und das wenigstens eine an dem weiteren Messerträger (50) angeordnete Messerwerkzeug (52) voneinander beabstandete Flugkreise (60, 62) haben.

13. Mulchgerät (10) nach einem der Ansprüche 4 bis 12, **gekennzeichnet durch** ein an dem Halterahmen (16) festgelegtes Verteilergetriebe (64), das eine Schnittstelle (66) zum Anschließen einer Gelenkwelle (68, 80) für das Verbinden mit einem Gelenkwellenabtrieb einer Arbeitsmaschine hat, das einen ersten mit einem ersten Getriebe (69) für das Antreiben der Rotorwelle (42) des Schlegelmähwerks (12) drehgekoppelten Abtrieb (70) hat und das einen zweiten mit einem zweiten Getriebe (72) für das Antreiben der Messerwelle (58) drehgekoppelten Abtrieb (74) hat.

14. Mulchgerät (10) nach Anspruch 13, **dadurch gekennzeichnet, dass** das erste Getriebe (69) für das Antreiben der Rotorwelle (42) einen Keilriementrieb enthält und das zweite Getriebe (72) eine als ein Keilriementrieb ausgebildete Drehmomentübertragungsstrecke (78) aufweist.

15. Mulchgerät (10) nach einem der Ansprüche 4 bis 14, **dadurch gekennzeichnet, dass** der Halterahmen (16) eine Schnittstelle (18) für den Anschluss an eine Arbeitsmaschine hat und das Sichelmähwerk (14) zwischen der Schnittstelle (18) und dem Schlegelmähwerk (12) angeordnet ist.

## Claims

1. Mulching device (10) comprising a flail mower (12) that has a rotor shaft (42) which is rotatable about a rotor axis (44) and has tools (46) accommodated thereon for cutting and/or shredding green matter and/or lumber and/or straw, in particular maize straw, and comprising a sickle mower (14) that has a blade support (50) which is rotatable about a blade shaft axis (48) that is skewed in relation to the rotor axis (44) of the flail mower (12), and which has at least one blade tool (52) arranged on the blade support (50) for cutting and/or shredding green matter and/or lumber and/or straw, in particular maize straw, **characterized in that** the blade support (50) of the sickle mower (14) is arranged so as to be linearly displaceable along an adjustment axis (38) that lies in a plane parallel to the rotor axis (44) of the rotor shaft (42) of the flail mower (12).

2. Mulching device (10) according to claim 1, **characterized in that** the sickle mower (14) has a further blade support (50) which is rotatable about a blade shaft axis (48) that is skewed in relation to the rotor axis (44) of the flail mower (12), and which has at least one blade tool (52) arranged on the blade support (50) for cutting and/or shredding green matter and/or lumber and/or straw, in particular maize straw.

3. Mulching device (10) according to claim 2, **characterized in that** the further blade support (50) of the sickle mower (14) is also arranged so as to be linearly displaceable along the adjustment axis (38).

4. Mulching device (10) according to claim 1, **characterized by** a holding frame (16) that accommodates the flail mower (12) and the sickle mower (14), the sickle mower (14) having a sickle mower support structure (20, 22) which has a rotary bearing (26, 32, 56), designed as an axial bearing, for holding a blade shaft (58) that is rotationally connected to the blade support (50) and rotates about the blade shaft axis (48), and the sickle mower support structure (20, 22) being accommodated in a linear bearing (34, 36) formed on the holding frame (16) for movement in the direction of the adjustment axis (38).

5. Mulching device (10) according to claim 4, **characterized by** a drive for moving the sickle mower support structure (20, 22) in the linear bearing (34, 36).

6. Mulching device (10) according to either claim 4 or claim 5, **characterized by** a rotatably mounted rolling body (24, 30) accommodated on the sickle mower support structure (20, 22) for supporting the sickle mower (14) on the ground.

7. Mulching device (10) according to any of claims 4 to 6, **characterized in that** the sickle mower (14) has a further blade support (50) which is rotatable about a further blade shaft axis (48) that is skewed in relation to the rotor axis (44) of the flail mower (12), and which has at least one blade tool (52) arranged on the blade support (50) for cutting and/or shredding green matter and/or lumber and/or straw, in particular maize straw.

8. Mulching device (10) according to claim 7, **characterized in that** the further blade support (50) of the sickle mower (14) is also arranged so as to be linearly displaceably along the adjustment axis (38) that is parallel to the rotor axis (44) of the rotor shaft (42) of the flail mower (12).

9. Mulching device (10) according to claim 8, **characterized in that** the sickle mower (14) has a further sickle mower support structure (22) comprising a further rotary bearing (26, 32, 56), designed as an axial bearing, for holding a further blade shaft (58) that is rotationally connected to the blade support (50) and rotates about the further blade shaft axis (54), the further sickle mower support structure (22) being accommodated in a further linear bearing (34,36) formed on the holding frame (16) for movement in the direction of the adjustment axis (38).

10. Mulching device (10) according to claim 9, **characterized by** a drive for moving the further sickle mower support structure (22) in the further linear bearing (34, 36).

11. Mulching device (10) according to either claim 9 or claim 10, **characterized by** a further rotatably mounted rolling body (24, 30) accommodated on the further sickle mower support structure (22) for supporting the sickle mower (14) on the ground.

12. Mulching device (10) according to any of claims 4 to 11, **characterized in that** the at least one blade tool (52) arranged on the blade support (50) and the at least one blade tool (52) arranged on the further blade support (50) have circular orbits (60, 62) that are spaced apart from one another.

13. Mulching device (10) according to any of claims 4 to 12, **characterized by** a transfer box (64) which is fixed to the holding frame (16) and has an interface (66) for connecting a PTO shaft (68, 80) to a PTO-shaft drive of a machine that has a first drive (70) rotationally coupled to a first transmission (69) for driving the rotor shaft (42) of the flail mower (12) and that has a second drive (74) rotationally coupled to a second transmission (72) for driving the blade shaft (58).

14. Mulching device (10) according to claim 13, **characterized in that** the first transmission (69) for driving the rotor shaft (42) contains a V-belt drive and the second transmission (72) comprises a torque transmission system (78) designed as a V-belt drive.

15. Mulching device (10) according to any of claims 4 to 14, **characterized in that** the holding frame (16) has an interface (18) for connecting to a machine, and the sickle mower (14) is arranged between the interface (18) and the flail mower (12).

## Revendications

1. Broyeur (10) muni d'une faucheuse à fléaux (12) présentant un arbre de rotor (42) tournant autour d'un axe de rotor (44), lequel arbre de rotor comporte des outils (46) pour le découpage et/ou le broyage de déchets verts et/ou de bois de sciage et/ou de paille, notamment de paille de maïs, et d'une faucheuse à lames (14) présentant un porte-couteau (50) entourant un axe d'arbre à couteaux (48) incliné par rapport à l'axe de rotor (44) de la faucheuse à fléaux (12), lequel porte-couteau comporte au moins un outil de coupe (52) disposé sur le porte-couteau (50) pour le découpage et/ou le broyage de déchets verts et/ou de bois de sciage et/ou de paille, notamment de paille de maïs, caractérisé en que le porte-couteau (50) de la faucheuse à lames (14) est disposé le long d'un axe de réglage (38) mobile linéairement, lequel axe se situe dans un plan parallèle à l'axe du rotor (44) de l'arbre de rotor (42) de la faucheuse à fléaux (12).

2. Broyeur (10) selon la revendication 1, **caractérisé en ce que** la faucheuse à lames (14) comporte un autre porte-couteau (50) entourant un autre axe d'arbre à couteaux (48) incliné par rapport à l'axe de rotor (44) de la faucheuse à fléaux (12), lequel porte-couteau comporte au moins un outil de coupe (52) disposé sur le porte-couteau (50) pour le découpage et/ou le broyage de déchets verts et/ou de bois de sciage et/ou de paille, notamment de paille de maïs.

3. Broyeur (10) selon la revendication 2, **caractérisé en ce que** l'autre porte-couteau (50) de la faucheuse à lames (14) est également disposé de manière déplaçable linéairement le long de l'axe de réglage (38).

4. Broyeur (10) selon la revendication 1, **caractérisé par** un cadre de maintien (16) recevant la faucheuse à fléaux (12) et la faucheuse à lames (14), la faucheuse à lames (14) comportant une structure de support de faucheuse à lames (20, 22) présentant un palier rotatif (26, 32, 56) conçu sous la forme d'un palier axial pour le maintien d'un arbre à couteaux (58) relié de manière solidaire en rotation avec le porte-couteau (50) et entourant autour de l'axe d'arbre à lames (48), et la structure de support de faucheuse à lames (20, 22) étant logée dans un palier linéaire (34, 36) formé sur le cadre de maintien (16) pour le déplacement dans la direction de l'axe de réglage (38).

5. Broyeur (10) selon la revendication 4, **caractérisé par** un entraînement permettant de déplacer la structure de support de faucheuse à lames (20, 22) dans le palier linéaire (34, 36).

6. Broyeur (10) selon la revendication 4 ou 5, **caractérisé par** un corps de roulement (24, 30) monté de manière rotative et logé dans la structure de support de faucheuse à lames (20, 22) pour l'appui au sol de la faucheuse à lames (14).

7. Broyeur (10) selon l'une des revendications 4 à 6, **caractérisé en ce que** la faucheuse à lames (14) comporte un autre porte-couteau (50) entourant un autre axe d'arbre à couteaux (48) incliné par rapport à l'axe de rotor (44) de la faucheuse à fléaux (12), lequel porte-couteau comporte au moins un outil de coupe (52) disposé sur le porte-couteau (50) pour le découpage et/ou le broyage de déchets verts et/ou de bois de sciage et/ou de paille, notamment de paille de maïs.

8. Broyeur (10) selon la revendication 7, **caractérisé en ce que** l'autre porte-couteau (50) de la faucheuse à lames (14) est disposé de manière déplaçable linéairement le long de l'axe de réglage (38) parallèle à l'axe de rotor (44) de l'arbre de rotor (42) de la faucheuse à fléaux (12).

9. Broyeur (10) selon la revendication 8, **caractérisé en ce que** la faucheuse à lames (14) comporte une autre structure de support de faucheuse à lames (22) présentant un autre palier rotatif (26, 32, 56) conçu sous la forme d'un palier axial pour le maintien d'un autre arbre à couteaux (58) relié de manière solidaire en rotation avec le porte-couteau (50) et entourant l'autre axe d'arbre à couteaux (54), l'autre structure de support de la faucheuse à lames (22) étant logé dans un autre palier linéaire (34, 36) formé sur le cadre de maintien (16) pour le déplacement dans la direction de l'axe de réglage (38).

10. Broyeur (10) selon la revendication 9, **caractérisé par** un entraînement pour le déplacement de l'autre structure de support de faucheuse à lames (22) dans l'autre palier linéaire (34, 36).

11. Broyeur (10) selon la revendication 9 ou 10, **caractérisé par** un autre corps de roulement (24, 30) monté de manière rotative et logé dans l'autre structure de support de faucheuse à lames (22) pour l'appui au sol de la faucheuse à lames (14).

12. Broyeur (10) selon l'une des revendications 4 à 11, **caractérisé en ce que** l'au moins un outil de coupe (52) disposé sur le porte-couteau (50) et l'au moins un outil de coupe (52) disposé sur l'autre porte-couteau (50) ont des orbites (60, 62) espacées l'une de l'autre.

13. Broyeur (10) selon l'une des revendications 4 à 12, **caractérisé par** une boîte de transfert (64) fixée sur le cadre de maintien (16), laquelle boîte comporte une interface (66) permettant de relier un arbre articulé (68, 80) pour la liaison avec une sortie d'arbre articulé d'une machine de travail présentant une première sortie (70) couplée en rotation à une première transmission (69) pour l'entraînement de l'arbre de rotor (42) de la faucheuse à fléaux (12), et présentant une seconde sortie (74) couplée en rotation à une seconde transmission (72) pour l'entraînement de l'arbre de coupe (58).

14. Broyeur (10) selon la revendication 13, **caractérisé en ce que** la première transmission (69) pour l'entraînement de l'arbre de rotor (42) présente une transmission par courroie trapézoïdale et la seconde transmission (72) présente une voie de transmission de couple (78) conçue sous la forme d'une transmission par courroie trapézoïdale.

15. Broyeur (10) selon l'une des revendications 4 à 14, **caractérisé en ce que** le cadre de maintien (16) comporte une interface (18) pour la connexion à une machine de travail, et **en ce que** la faucheuse à lames (14) est disposée entre l'interface (18) et la faucheuse à fléaux (12).
